# EUROPÄISCHE PATENTSCHRIFT

(11) **EP 2 598 735 B1**
(45) Veröffentlichungstag und Bekanntmachung des Hinweises auf die Patenterteilung: **07.10.2015**
(21) Anmeldenummer: 11732382.4
(22) Anmeldetag: 13.07.2011
(51) Int. Cl.: F02B 75/04, F16F 15/28, F16F 15/26

(54) **BRENNKRAFTMASCHINE MIT MEHRGELENKSKURBELTRIEB UND ZUSATZMASSEN AN ANLENKPLEUELN DES MEHRGELENKSKURBELTRIEBS ZUR TILGUNG VON FREIEN MASSENKRÄFTEN**
INTERNAL COMBUSTION ENGINE HAVING A MULTI-JOINT CRANK DRIVE AND ADDITIONAL MASSES ON ARTICULATED CONNECTING RODS OF THE MULTI-JOINT CRANK DRIVE FOR DAMPING FREE MASS FORCES
MOTEUR À COMBUSTION INTERNE À MÉCANISME À BIELLE ET MANIVELLE À ARTICULATIONS MULTIPLES ET MASSES SUPPLÉMENTAIRES SUR LES BIELLETTES ARTICULÉES DU MÉCANISME À BIELLE ET MANIVELLE À ARTICULATIONS MULTIPLES POUR L'AMORTISSEMENT DES FORCES D'INERTIE LIBRES

(30) Priorität: 28.07.2010 DE 102010032441
(43) Veröffentlichungstag der Anmeldung: 05.06.2013
(73) Patentinhaber: Audi AG, 85045 Ingolstadt (DE)
(72) Erfinder: BRENDEL, Matthias, 85049 Ingolstadt (DE)
(86) Internationale Anmeldenummer: PCT/EP2011/003489
(87) Internationale Veröffentlichungsnummer: WO 2012/013298

(56) Entgegenhaltungen:
- EP-A1- 2 119 889
- EP-A1- 2 119 890
- EP-A2- 1 830 051
- WO-A1-2010/046741

## Beschreibung

Die Erfindung betrifft eine Brennkraftmaschine gemäß dem Oberbegriff des Anspruchs 1.

Brennkraftmaschinen dieser Art sind zum Beispiel aus der DE-A-102005054761, der DE-A-102005054760, der EP-A-1126144, der JP-A-2004124775 oder der WO-A-2007057149 bekannt und werden häufig als Brennkraftmaschinen mit variablem oder veränderlichem Verdichtungsverhältnis bezeichnet, da sich das Verdichtungsverhältnis durch Verdrehen der Exzenterwelle verändern lässt.

Bei diesen Brennkraftmaschinen umfasst der Mehrgelenkskurbeltrieb neben der Exzenterwelle eine der Anzahl der Zylinder entsprechende Anzahl von Koppelgliedern, die jeweils drehbar auf einem Hubzapfen der Kurbelwelle gelagert sind und zwei nach entgegengesetzten Seiten über die Kurbelwelle überstehende, an ihrem Ende jeweils mit einem Schwenkgelenk versehene Arme aufweisen. Eines der Schwenkgelenke dient zur Anlenkung eines Kolbenpleuels, der einen der Kolben der Brennkraftmaschine über das Koppelglied mit der Kurbelwelle verbindet, während das andere Schwenkgelenk zur Anlenkung eines so genannten Anlenkpleuels dient, der mit seinem anderen Ende drehbar auf einem Hubzapfen der Exzenterwelle gelagert ist.

Brennkraftmaschinen der eingangs genannten Art sind weiter zum Beispiel aus der EP-B-1359303, der EP-A-1760290, der EP-A-1760289 und aus der US-A-4517931 sowie aus WO 2010/046741 A und EP 2 119 890 A bekannt. Bei diesen Brennkraftmaschinen, die häufig als Brennkraftmaschinen mit verlängerter Expansion bezeichnet werden, wird die Exzenterwelle mit der halben Drehzahl der Kurbelwelle angetrieben.

Bei sämtlichen dieser Brennkraftmaschinen werden durch oszillierende Massen freie Massenkräfte erster und zweiter Ordnung verursacht, die sich mit dem Kurbelwinkel verändern. Während die Massenkräfte erster Ordnung durch Ausgleichgewichte auf der Kurbelwelle und die Kurbelwellenkröpfungsfolge ausgeglichen werden können, werden die freien Massenkräfte zweiter Ordnung bei bekannten Brennkraftmaschinen der eingangs genannten Art trotz verschiedenster Maßnahmen nicht vollständig ausgeglichen. Aus diesem Grund sind Brennkraftmaschinen der eingangs genannten Art mit Mehrgelenkskurbeltrieb im Hinblick auf die Laufruhe oder Laufkultur herkömmlichen Brennkraftmaschinen ohne Mehrgelenkskurbeltrieb unterlegen, bei denen der Ausgleich von Massenkräften zweiter Ordnung häufig mit Hilfe von zwei gegenläufig rotierenden Ausgleichswellen erfolgt, die mit der doppelten Drehzahl der Kurbelwelle angetrieben werden. Diese Maßnahme lässt sich jedoch nicht ohne weiteres auf Brennkraftmaschinen mit Mehrgelenkskurbeltrieb übertragen, da dort zum einen die entstehenden Massenkräfte nicht rein oszillierend sondern rotierend verlaufen und zum anderen die Reibungsverluste des Mehrgelenkskurbeltriebs bereits an sich höher als die Reibungsverluste konventioneller Brennkraftmaschinen sind und durch die zusätzlichen Reibungsverluste zweier Ausgleichswellen auf ein inakzeptables Maß vergrößert würden.

Um dies zu vermeiden, wurde in der noch unveröffentlichten Deutschen Patentanmeldung 10 2010 004 589 der Anmelderin bereits vorgeschlagen, bei Brennkraftmaschinen der eingangs genannten Art zur Tilgung von Massenkräften zweiter Ordnung nur eine einzige Ausgleichswelle vorzusehen, mit der sich diese Massenkräfte nahezu vollständig ausgleichen lassen.

Ausgehend hiervon liegt der Erfindung die Aufgabe zugrunde, eine Brennkraftmaschine der eingangs genannten Art dahingehend zu verbessern, dass sich die Massenkräfte zweiter Ordnung ohne eine erhebliche Vergrößerung der Reibungsverluste, des benötigten Bauraums, des Gewichts des Mehrgelenkskurbeltriebs oder der Lagerkräfte in den Lagern der Kurbelwelle noch besser ausgleichen lassen.

Diese Aufgabe wird erfindungsgemäß durch die Merkmale des Anspruchs 1 gelöst.

Der Erfindung liegt zum einen die Erkenntnis zugrunde, dass bei Brennkraftmaschinen der eingangs genannten Art neben den klassischen oszillierenden Massen, wie den Kolben, den Kolbenpleueln und den Koppelgliedem auch die sich hin und her bewegenden Anlenkpleuel erheblichen Einfluss auf die Massenkräfte zweiter Ordnung haben. Weiter liegt der Erfindung die Erkenntnis zugrunde, dass sich die freien Massenkräfte zweiter Ordnung vollständig oder zumindest zum überwiegenden Teil eliminieren lassen, wenn die Vektorsumme der Kraftvektoren der Massenkräfte sämtlicher oszillierender Massen zu Null wird bzw. nahe an Null herangerückt wird.

Indem man die bewegte Masse der Anlenkpleuel an ausgewählten Stellen der Anlenkpleuel verändert, lassen sich somit die Massenschwerpunktslagen der Anlenkpleuel und damit die Kraftvektoren der von den Anlenkpleueln verursachten Massenkräfte zweiter Ordnung gezielt beeinflussen, um die Vektorsumme der Kraftvektoren der Massenkräfte sämtlicher oszillierender Massen zu Null zu machen bzw. näher an Null heranzurücken, ohne dass dadurch andere ungünstige Auswirkungen, wie beispielsweise ein starker Anstieg der Lagerkräfte in den Kurbelwellenlagem, verursacht werden.

Wie Simulationen gezeigt haben, kann bei Brennkraftmaschinen der eingangs genannten Art mit der erfindungsgemäßen Lösung der Massenausgleich der Massenkräfte zweiter Ordnung mit einem verhältnismäßig geringer Bauraum- und Gewichtszuwachs signifikant verbessert werden.

Die erfindungsgemäße Lösung eignet sich sowohl für Brennkraftmaschinen mit Mehrgelenkskurbeltrieb und variabler Verdichtung als auch für Brennkraftmaschinen mit Mehrgelenkskurbeltrieb und verlängerter Expansion.

Eine bevorzugte Ausgestaltung der Erfindung sieht vor, dass die Zusatzmassen und/oder die Massenschwerpunkte der Anlenkpleuel jeweils auf der von der Kurbelwelle abgewandten Seite der Längsmittelebenen der Anlenkpleuel liegen, wobei die Zusatzmassen vorzugsweise im Bereich eines großen Pleuelauges asymmetrisch zu den Längsmittelebenen über die von der Kurbelwelle abgewandte Seite der Anlenkpleuel überstehen.

Damit die Abmessungen der Zusatzmassen in jeder Schwenklage der Anlenkpleuel dieselben sind, weisen die Zusatzmassen vorteilhaft auf ihrer vom Anlenkpleuel abgewandten Seite eine kreisbogenförmige Begrenzung auf, die allgemein koaxial zu einer Längsmittelachse des großen Pleuelauges ist und zweckmäßig einen Radius R zwischen 40 und 80 mm aufweist.

Um den für die Zusatzmassen erforderlichen Bauraum so weit wie möglich zu minimieren, können die Zusatzmassen vorteilhaft mindestens teilweise aus einem Material mit einem höheren spezifischen Gewicht als demjenigen der Anlenkpleuel selbst bestehen.

Die erfindungsgemäße Lösung betrifft zweiteilige Anlenkpleuel, bei denen die Zusatzmassen im Bereich des großen Pleuelauges an einem Pleuelfuß der Anlenkpleuel angebracht sind.

Die Zusatzmassen werden zweckmäßig einstückig an den Anlenkpleuel angeformt, können jedoch alternativ auch an den Anlenkpleueln festgeschraubt werden.

Im Folgenden wird die Erfindung anhand eines in der Zeichnung dargestellten Ausführungsbeispiels näher erläutert. Es zeigen
Fig. 1 eine perspektivische Ansicht von Teilen einer Brennkraftmaschine mit variablem Verdichtungsverhältnis und einem Mehrgelenkskurbeltrieb;
Fig. 2 eine Stirnseitenansicht der in Fig. 1 dargestellten Teile;
Fig. 3 eine perspektivische Darstellung eines Anlenkpleuels des Mehrgelenkskurbeltriebs;
Fig. 4 eine Stirnseitenansicht von Teilen einer Brennkraftmaschine mit verlängerter Expansion und einem Mehrgelenkskurbeltrieb;
Fig. 5 eine Stirnseitenansicht von Teilen einer anderen Brennkraftmaschine mit verlängerter Expansion und einem Mehrgelenkskurbeltrieb;
Fig. 6 ein Balkendiagramm mit verschiedenen Balkenpaaren, die freie Massenkräfte zweiter und vierter Ordnung in Richtung einer Hoch- und einer Querachse der Brennkraftmaschine zeigen;
Fig. 7 zwei Vektordarstellungen der freie Massenkräfte zweiter Ordnung in Richtung einer Hochachse der Brennkraftmaschine.

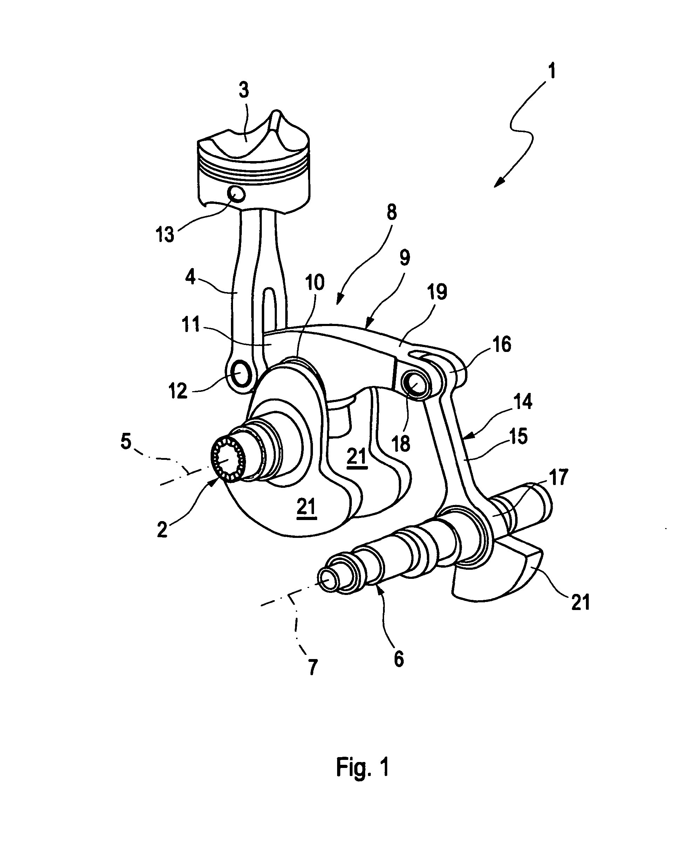

Wie am besten in den Figuren 1 und 2 sowie 4 und 5 dargestellt, umfassen die in der Zeichnung nur teilweise dargestellten Viertakt-4-Zylinder-Brennkraftmaschinen 1 in Reihenanordnung eine Kurbelwelle 2 und vier Kolben 3, von denen in der Zeichnung jeweils nur einer dargestellt ist. Die Kolben 3 sind in einem Zylinder (nicht dargestellt) der Brennkraftmaschine 1 auf und ab beweglich und durch ein Kolbenpleuel 4 mit der Kurbelwelle 2 verbunden. Die Kurbelwelle 2 ist in einem Zylinderkurbelgehäuse (nicht dargestellt) der Brennkraftmaschinen 1 um eine Drehachse 5 drehbar gelagert.

Die Brennkraftmaschinen 1 umfassen weiter eine Exzenterwelle 6, die eine zur Drehachse 5 der Kurbelwelle 2 parallele Drehachse 7 aufweist, neben der Kurbelwelle 2 sowie etwas unterhalb von dieser im Zylinderkurbelgehäuse drehbar gelagert und über einen Mehrgelenkskurbeltrieb 8 mit der Kurbelwelle 2 gekoppelt ist.

Neben der Kurbelwelle 2 und der Exzenterwelle 6 umfasst der Mehrgelenkskurbeltrieb 8 insgesamt vier Koppelglieder 9 (nur eines dargestellt), die jeweils auf einem Hubzapfen 10 der Kurbelwelle 2 drehbar gelagert sind. Jedes Koppelglied 9 weist einen kürzeren Hubarm 11 auf, der über ein Schwenkgelenk 12 schwenkbar mit dem unteren Ende von einem der Kolbenpleuel 4 verbunden ist, dessen oberes Ende über ein weiteres Schwenkgelenk 13 am zugehörigen Kolben 3 angelenkt ist.

Der Mehrgelenkskurbeltrieb 8 umfasst weiter eine der Anzahl der Kolbenpleuel 4 und der Koppelglieder 9 entsprechende Anzahl von Anlenkpleueln 14, die ungefähr parallel zu den Kolbenpleueln 4 ausgerichtet und in axialer Richtung der Kurbelwelle 2 und der Exzenterwelle 6 jeweils etwa in derselben Ebene wie der zugehörige Kolbenpleuel 4, jedoch auf der entgegengesetzten Seite der Kurbelwelle 2 angeordnet sind.

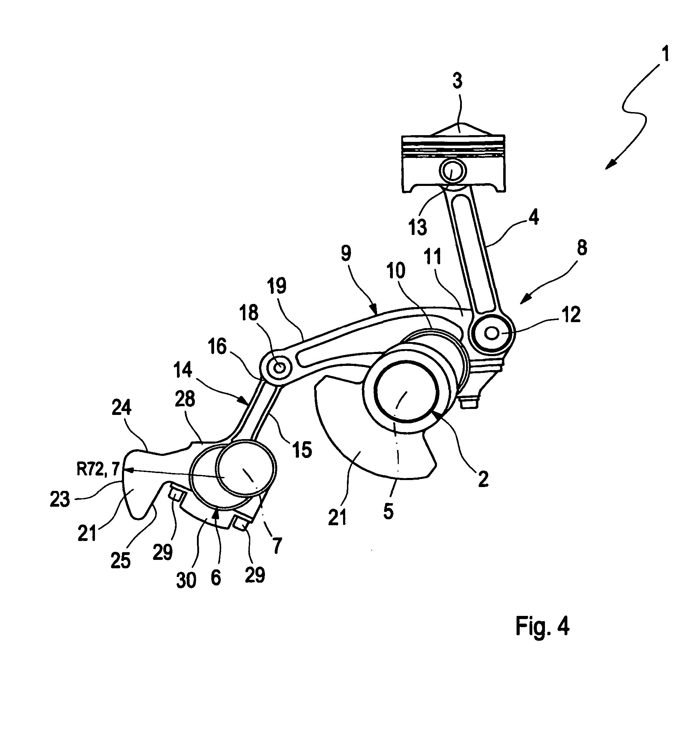

Während die in den Figuren 1 bis 3 und 5 dargestellten Anlenkpleuel 14 nicht-erfindungsgemäß einteilig ausgebildet sind, ist der Anlenkpleuel 14 in Fig. 4 erfindungsgemäß zweiteilig ausgebildet, wobei er ein geteiltes Lagerauge 17 mit einem Pleuelfuß 28 und einem mit Schrauben 29 am Pleuelfuß 28 befestigten Pleueldeckel 30 aufweist. Erfindungsgemäß ist die Zusatzmasse 21 am Pleuelfuß 28 angeformt, wobei sie ein Stück weit in Richtung des Pleueldeckels 30 übersteht.

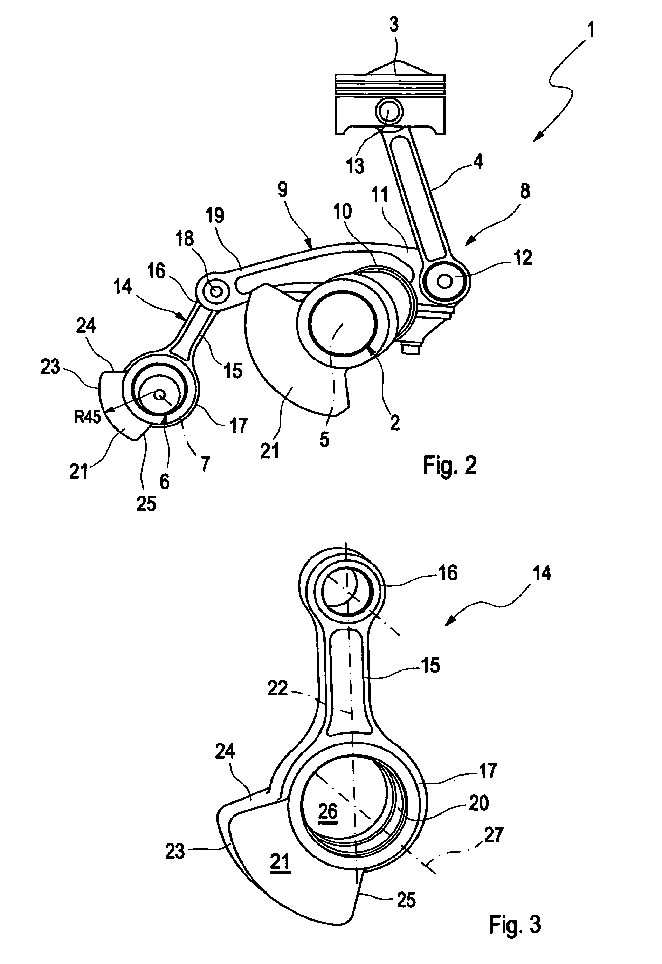

Wie am besten in den Fig. 3 dargestellt, umfasst jedes Anlenkpleuel 14 eine Pleuelstange 15 und zwei an entgegengesetzten Enden der Pleuelstange 15 angeordnete Pleuelaugen 16, 17 mit unterschiedlichen Innendurchmessern. Das große Pleuelauge 17 jedes Anlenkpleuels 14 am unteren Ende der Pleuelstange 15 dient zur Aufnahme eines in Bezug zur Drehachse 7 exzentrischen Hubzapfens der Exzenterwelle 6, auf dem das Anlenkpleuel 14 mittels einer Gleitlagerbuchse 20 drehbar gelagert ist. Das kleinere Pleuelauge 16 am oberen Ende der Pleuelstange 15 jedes Anlenkpleuels 14 dient zur Aufnahme eines Schwenkbolzens 18 eines Schwenkgelenks zwischen dem Anlenkpleuel 14 und einem längeren Koppelarm 19 des benachbarten Koppelgliedes 9, der auf der zum Hubarm 11 entgegengesetzten Seite der Kurbelwelle 2 über die letztere übersteht.

Bei der in Fig. 1 und 2 dargestellten Brennkraftmaschine 1 mit variablem Verdichtungsverhältnis kann die Exzenterwelle 6 um ihre Drehachse 7 verdreht werden, um das Verdichtungsverhältnis der Brennkraftmaschine 1 zu verändern.

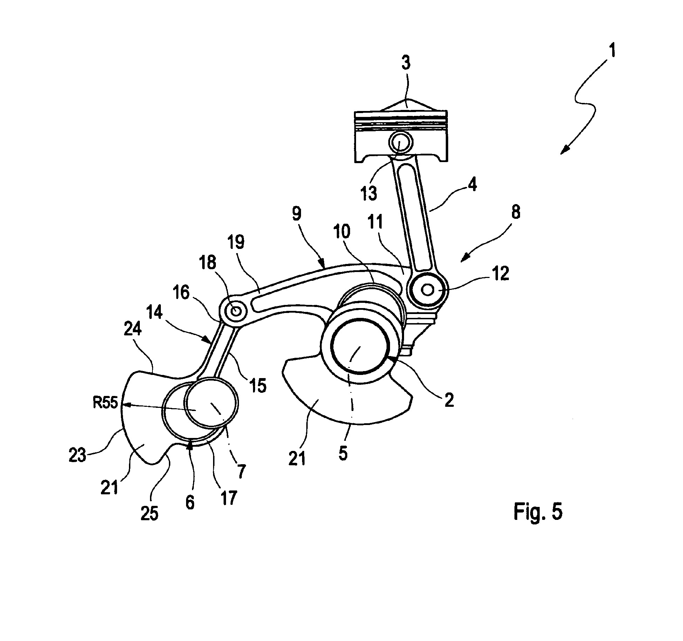

Bei den in Fig. 4 und 5 dargestellten Brennkraftmaschinen 1 mit verlängerter Expansion wird die Exzenterwelle 6 hingegen mit der halben Drehzahl der Kurbelwelle 3 angetrieben.

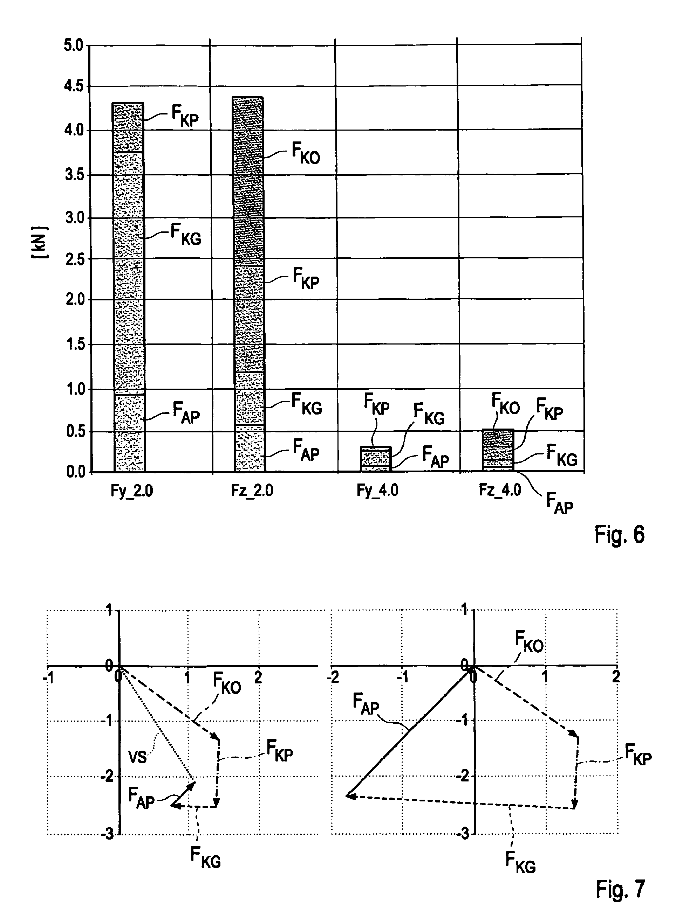

Durch die oszillierenden Massen der Kolben 3, der Kolbenpleuel 4, der Koppelglieder 9 und der Anlenkpleuel 14 entstehen freie Massenkräfte, die soweit wie möglich ausgeglichen werden sollten, um die Laufruhe und die Akustik der Brennkraftmaschine 1 zu verbessern. Diese freien Massenkräfte umfassen in erster Linie Massenkräfte erster Ordnung F_1.0, Massenkräfte zweiter Ordnung F_2.0 sowie Massenkräfte weiterer Ordnungen, von denen die vergleichsweise großen Massenkräfte zweiter Ordnung F_2.0 und die vergleichsweise kleinen Massenkräfte vierter Ordnung F_4.0 als Balkendiagramme in Fig. 6 dargestellt sind.

Wie in Fig. 6 dargestellt ist, lassen sich die Massenkräfte zweiter Ordnung F_2.0 und vierter Ordnung F_4.0 jeweils in eine parallel zur Y- oder Querachse der Brennkraftmaschine 1 ausgerichtete Kraftkomponente Fy_2.0 bzw. und Fy_4.0 und eine parallel zur Z- oder Hochachse der Brennkraftmaschine 1 (Zylinderachsrichtung) ausgerichteten Kraftkömponente Fz_2.0 bzw. Fz_4.0 zerlegen.

Wie ebenfalls in Fig. 6 dargestellt ist, setzen sich die parallel zur Y- oder Querachse der Brennkraftmaschine 1 ausgerichteten Kraftkomponenten Fy_2.0 und Fy_4.0 jeweils aus einem Massenkraftanteil F_{KP} der oszillierenden Massen der Kolbenpleuel 4, einem Massenkraftanteil F_{KG} der oszillierenden Massen der Koppelglieder 9 und einem Massenkraftanteil F_{AP} der oszillierenden Massen der Anlenkpleuel 14 zusammen, während sich die parallel zur Z- oder Hochachse der Brennkraftmaschine 1, d.h. in Zylinderachsrichtung ausgerichteten Kraftkomponenten Fz_2.0 und Fz_4.0 jeweils aus einem Massenkraftanteil F_{KD} der oszillierenden Massen der Kolben 3, einem Massenkraftanteil F_{KP} der oszillierenden Massen der Kolbenpleuel 4, einem Massenkraftanteil F_{KG} der oszillierenden Massen der Koppelglieder 9 und einem Massenkraftanteil F_{AP} der oszillierenden Massen der Anlenkpleuel 14 zusammensetzen.

In Fig. 7 sind die Massenkraftanteile F_{KO}, F_{KP}, F_{KG} und F_{AP} der parallel zur Z- oder Hochachse der Brennkraftmaschine 1 ausgerichteten Kraftkomponente Fz_2.0 nicht nur wie in Fig. 6 mit ihrem Betrag, sondern darüber hinaus auch mit ihrer jeweiligen Phasenlage als Kraftvektoren dargestellt, deren Länge dem jeweiligen Betrag des Massenkraftanteils entspricht, während die Ausrichtung die Phasenlage angibt. Die Vektorsumme VS entspricht den freien Massenkräften zweiter Ordnung in einer Richtung parallel zur Z- oder Hochachse der Brennkraftmaschine 1 und weist in der linken Abbildung in Fig. 7 eine beträchtliche Größe auf, so dass in dieser Richtung beträchtliche freie Massenkräfte zweiter Ordnung vorhanden sind. Wie man in der rechten Abbildung in Fig. 7 sieht, lässt sich durch eine Skalierung einzelner Massenkraftanteile F_{KO}, F_{KP}, F_{KG} und F_{AP}, d.h. eine Vergrößerung oder Verkleinerung der Massen einzelner Bauteile 4, 6, 9, 14, die Vektorsumme VS in dieser Richtung auf Null verkleinern, was bei dem in der rechten Abbildung in Fig. 7 dargestellten Ausführungsbeispiel durch eine Vergrößerung der Massen der Koppelglieder 9 und der Anlenkpleuel 14 erfolgt. Dadurch können die parallel zur Z- oder Hochachse der Brennkraftmaschine 1 ausgerichteten freien Massenkräften zweiter Ordnung vollständig getilgt und dadurch die Laufruhe der Brennkraftmaschine 1 verbessert werden. Alternativ können in entsprechender Weise die parallel zur Y- oder Querachse der Brennkraftmaschine 1 ausgerichteten freien Massenkräften zweiter Ordnung getilgt oder die geometrische Summe der freien Massenkräfte in Richtung der Y- oder Querachse und der Z- oder Hochachse der Brennkraftmaschine 1 verringert werden.

Die Vergrößerung der Masse der Anlenkpleuel 14 zur Vergrößerung des Kraftvektors der Massenkraftanteile F_{AP} der freien Massenkräfte zweiter Ordnung in einer Richtung parallel zur Z- oder Hochachse der Brennkraftmaschine 1, wie in der rechten Abbildung in Fig. 7 dargestellt, erfolgt durch eine an jedem Anlenkpleuel 14 angebrachte Zusatzmasse 21, die asymmetrisch zu einer von den Mittelachsen der beiden Pleuelaugen 16, 17 aufgespannten Längsmittelebene 22 im Bereich des größeren Pleuelauges 17 so am Anlenkpleuel 14 angeformt ist, dass dessen Massenschwerpunkt durch die Zusatzmasse 21 aus der Längsmittelebene 22 heraus verlagert wird.

Wie am besten in den Figuren 1, 2, 4 und 5 dargestellt, sind die Zusatzmassen 21 jeweils auf der von der Kurbelwelle 2 abgewandten Seite der größeren Pleuelaugen 17 der Anlenkpleuel 14 einstückig an der Außenseite der Pleuelaugen 17 angeformt. Wie am besten in Fig. 3 dargestellt, weisen die Zusatzmassen 21 die Form eines Sektors eine Kreisrings auf, der sich um einen Teil des größeren Pleuelauges 17 herum erstreckt und an seiner vom Pleuelauge 17 abgewandten Seite eine kreisbogenförmige Begrenzung 23 aufweist, die koaxial zu einer Längsmittelachse 27 des großen Pleuelauges 17 ist. Die Zusatzmassen 21 weisen in Umfangsrichtung des Pleuelauges 17 zwei ebene Begrenzungen 24, 25 auf, die ungefähr tangential zu einer vom Pleuelauge 17 umschlossenen zylindrischen Öffnung 26 ausgerichtet sind und sich über einen Umfangswinkel von 60 bis 80 Grad erstrecken.

Wie in den Figuren 2, 4 und 5 dargestellt, kann der Radius R der kreisbogenförmigen Begrenzung 23 je nach Ausbildung der Brennkraftmaschine 1 variieren, wobei er bei der in Fig. 1 und 2 dargestellten Brennkraftmaschine 1 mit variablem Verdichtungsverhältnis mit 45 mm am kleinsten ist und bei den in Fig. 4 und 5 dargestellten Brennkraftmaschinen 1 mit verlängertem Expansionshub 72,7 mm bzw. 55 mm beträgt.

Durch Herstellung der Zusatzmassen 21 aus einem Material mit einem im Vergleich zum Material der Anlenkpleuel 14 höheren spezifischen Gewicht, wie zum Beispiel einem Schwermetall, können die Abmessungen der Zusatzmassen 21 noch verkleinert werden.

### BEZUGSZEICHENLISTE

- 1: Brennkraftmaschine
- 2: Kurbelwelle
- 3: Kolben
- 4: Kolbenpleuel
- 5: Drehachse Kurbelwelle
- 6: Exzenterwelle
- 7: Drehachse Exzenterwelle
- 8: Mehrgelenkskurbeltrieb
- 9: Koppelglied
- 10: Hubzapfen Kurbelwelle
- 11: Hubarm Koppelglied
- 12: Schwenkgelenk
- 13: Schwenkgelenk
- 14: Anlenkpleuel
- 15: Pleuelstange
- 16: kleineres Pleuelauge
- 17: größeres Pleuelauge
- 18: Schwenkbolzen
- 19: Koppelarm
- 20: Gleitlagerbuchse
- 21: Zusatzmasse
- 22: Längsmittelebene
- 23: Begrenzung
- 24: Begrenzung
- 25: Begrenzung
- 26: Öffnung Pleuelauge
- 27: Längsmittelachse
- 28: Pleuelfuß
- 29: Pleuelschrauben
- 30: Pleueldeckel

## Patentansprüche

1. Brennkraftmaschine (1) mit einem Mehrgelenkskurbeltrieb (8), wobei der Mehrgelenkskurbeltrieb (8) eine Mehrzahl von drehbar auf einer Kurbelwelle (2) gelagerten Koppelgliedern (9) und eine Mehrzahl von drehbar auf einer Exzenterwelle (6) gelagerten Anlenkpleueln (14) umfasst, wobei jedes der Koppelglieder (9) schwenkbar mit einem Kolbenpleuel (4) eines Kolbens (3) der Brennkraftmaschine (1) und einem der Anlenkpleuel (14) verbunden ist, wobei die Anlenkpleuel (14) mit Zusatzmassen (21) versehen sind und einen außerhalb ihrer Längsmittelebenen (22) liegenden Massenschwerpunkt besitzen, und wobei die Anlenkpleuel (14) zweiteilig ausgebildet sind, wobei sie jeweils ein geteiltes Lagerauge (17) mit einem Pleuelfuß (28) und einen mit Schrauben (29) am Pleuelfuß (28) befestigten Pleueldeckel (30) aufweisen, **dadurch gekennzeichnet, dass** die Zusatzmassen (21) an den Pleuelfüßen (28) derart angeformt sind, dass sie ein Stück weit in Richtung des Pleueldeckels (30) überstehen.

2. Brennkraftmaschine nach Anspruch 1, **dadurch gekennzeichnet, dass** die Zusatzmassen (21) und/oder die Massenschwerpunkte der Anlenkpleuel (14) auf der von der Kurbelwelle (2) abgewandten Seite der Längsmittelebenen (22) der Anlenkpleuel (14) liegen.

3. Brennkraftmaschine nach einem der vorangehenden Ansprüche, **dadurch gekennzeichnet, dass** die Zusatzmassen (21) in Bezug zu den Längsmittelebenen (22) der Anlenkpleuel (14) asymmetrisch über die Anlenkpleuel (14) überstehen.

4. Brennkraftmaschine nach Anspruch 3, **dadurch gekennzeichnet, dass** die Zusatzmassen im Bereich eines großen Pleuelauges (17) über die Anlenkpleuel (14) überstehen.

5. Brennkraftmaschine nach einem der vorangehenden Ansprüche, **dadurch gekennzeichnet, dass** die Zusatzmassen (21) auf ihrer vom Anlenkpleuel (14) abgewandten Seite eine kreisbogenförmige Begrenzung (23) aufweisen.

6. Brennkraftmaschine nach Anspruch 5, **dadurch gekennzeichnet, dass** die kreisbogenförmige Begrenzung (23) allgemein koaxial zu einer Längsmittelachse (27) des großen Pleuelauges (17) und einen Radius R zwischen 40 und 80 mm aufweist.

7. Brennkraftmaschine nach einem der vorangehenden Ansprüche, **dadurch gekennzeichnet, dass** die Zusatzmassen (21) mindestens teilweise aus einem Material mit einem höheren spezifischen Gewicht als demjenigen der Anlenkpleuel (14) bestehen.

## Claims

1. Internal combustion engine (1) having a multi-joint crank drive (8), wherein the multi-joint crank drive (8) comprises a plurality of coupling members (9) mounted rotatably on a crankshaft (2) and a plurality of articulated connecting rods (14) mounted rotatably on an eccentric shaft (6), wherein each of the coupling members (9) is connected in a pivotable manner to a piston connecting rod (4) of a piston (3) of the internal combustion engine (1) and to one of the articulated connecting rods (14), wherein the articulated connecting rods (14) are provided with additional masses (21) and have a centre of mass located outside of their longitudinal central planes (22), and wherein the articulated connecting rods (14) are formed in two parts, wherein they each have a split bearing eye (17) with a connecting rod foot (28) and a connecting rod cover (30) that is attached by screws (29) to the connecting rod foot (28), **characterised in that** the additional masses (21) are integrally formed on the connecting rod feet (28) in such a way that they protrude somewhat in the direction of the connecting rod cover (30).

2. Internal combustion engine according to claim 1, **characterised in that** the additional masses (21) and/or the centres of mass of the articulated connecting rods (14) lie on the side of the longitudinal central planes (22) of the articulated connecting rods (14) that faces away from the crankshaft (2).

3. Internal combustion engine according to any of the preceding claims, **characterised in that** the additional masses (21) protrude beyond the articulated connecting rods (14) in an asymmetric manner with respect to the longitudinal central planes (22) of the articulated connecting rods (14).

4. Internal combustion engine according to claim 3, **characterised in that** the additional masses protrude beyond the articulated connecting rods (14) in the region of a large connecting rod eye (17).

5. Internal combustion engine according to any of the preceding claims, **characterised in that** the additional masses (21) have an arc-shaped border (23) on their side facing away from the articulated connecting rods (14).

6. Internal combustion engine according to claim 5, **characterised in that** the arc-shaped border (23) generally coaxial to a longitudinal central axis (27) of the large connecting rod eye (17) and has a radius R between 40 and 80 mm.

7. Internal combustion engine according to any of the preceding claims, **characterised in that** the additional masses (21) are made at least partially of a material having a higher specific weight than that of the articulated connecting rods (14).

## Revendications

1. Moteur à combustion interne (1) avec un mécanisme d'embiellage à articulations multiples (8), le mécanisme d'embiellage à articulations multiples (8) comprenant une multiplicité d'éléments de couplage (9) montés de manière à pouvoir tourner sur un vilebrequin (2) et une multiplicité de bielles articulées (14) montées de manière à pouvoir tourner sur un arbre d'excentrique (6), chacun des éléments de couplage (9) étant relié de manière à pouvoir pivoter à une bielle de piston (4) d'un piston (3) du moteur à combustion interne (1) et à l'une des bielles articulées (14), les bielles articulées (14) étant munies de masses supplémentaires (21) et ayant un centre de gravité massique situé en dehors de leurs plans médians longitudinaux (22) et les bielles articulées (14) étant conçues en deux parties, lesdites bielles comportant à chaque fois un oeil de palier divisé (17) avec un pied de bielle (28) et un chapeau de bielle (30) fixé au pied de bielle (28) avec des vis (29), **caractérisé en ce que** les masses supplémentaires (21) sont formées sur les pieds de bielle (28) de telle sorte qu'elles dépassent un peu dans la direction du chapeau de bielle (30).

2. Moteur à combustion interne selon la revendication 1, **caractérisé en ce que** les masses supplémentaires (21) et/ou les centres de gravité massiques des bielles articulées (14) se trouvent sur le côté, éloigné du vilebrequin (2), des plans médians longitudinaux (22) des bielles articulées (14).

3. Moteur à combustion interne selon l'une des revendications précédentes, **caractérisé en ce que** les masses supplémentaires (21) dépassent des bielles articulées (14) de façon asymétrique par rapport aux plans médians longitudinaux (22) des bielles articulées (14).

4. Moteur à combustion interne selon la revendication 3, **caractérisé en ce que** les masses supplémentaires dépassent des bielles articulées (14) dans la zone d'un grand oeil de bielle (17).

5. Moteur à combustion interne selon l'une des revendications précédentes, **caractérisé en ce que** les masses supplémentaires (21) comportent une délimitation (23) en forme d'arc de cercle sur leur côté éloigné de la bielle articulée (14).

6. Moteur à combustion interne selon la revendication 5, **caractérisé en ce que** la délimitation (23) en forme d'arc de cercle est généralement coaxiale avec un axe médian longitudinal (27) du grand oeil de bielle (17) et présente un rayon R compris entre 40 et 80 mm.

7. Moteur à combustion interne selon l'une des revendications précédentes, **caractérisé en ce que** les masses supplémentaires (21) sont constituées au moins en partie en un matériau ayant un poids spécifique supérieur à celui des bielles articulées (14).
